# EUROPEAN PATENT APPLICATION

(11) **EP 1 079 606 A2**
(43) Date of publication of application: **28.02.2001**
(21) Application number: 00306839.2
(22) Date of filing: 10.08.2000
(51) Int. Cl.: H04N 1/60

(54) **Color space adjustment for multiple different substrates**

(30) Priority: 11.08.1999 US 372506
(71) Applicant: CANON KABUSHIKI KAISHA, Tokyo (JP)
(72) Inventor: Kohler, Timothy L., Irvine, California 92612 (US)
(74) Representative: Beresford, Keith Denis Lewis

(57) **Abstract**

In a method and system for adjusting a color space for use with a target substrate, the color space definition has a translation table to transform colors between a device-independent coordinate system and a device-specific coordinate system. Tristimulus values of the target substrate and printing colorant (e.g., ink or toner) primaries printed on the target substrate are measured, and the color table of the color space is transformed based on color values of the color space, the measured tristimulus values of the printing colorant primaries and the measured tristimulus values of the target substrate. A memory medium storing program code for executing such method is also provided.

## Description

The present invention relates to adjustment of color spaces for use with various combinations of printing conditions and media (substrates), and is useful with all types of image display and output devices, including high-quality printing press systems, and printers, especially color laser printers, color copiers, color fax machines, displays such as CRT's, LCD's, electron-beam displays, active-pixel array devices of all types.

In this section there will be discussed the nature and role of color management, especially in desktop publishing environments and other computer environments, and its lesser role in traditional graphic arts environments. Certain recent trends in color management, which form the context for the present invention, will then be set out.

Color images are typically encountered in computing environments for display on monitors and for printing on color printers. With the growing popularity of the Internet and of digital color devices such as digital cameras and digital video cameras, the use of color images in computing environments has increased significantly, and will undoubtedly continue to do so. Data corresponding to a color image is commonly stored in a data file provided on some type of recording medium, such as a hard disk, floppy or CD-ROM, thereby allowing the color image data to be transferred for output to other devices.

Color image data is provided to a computer or computing device from a variety of input devices, such as scanners, floppy disks, CD-ROMs, the Internet, digital cameras and digital video cameras. The color image data can then be viewed by sending it to a variety of output devices such as printing press systems, monitors, printers, digital projectors, digital cameras and digital video cameras. Generally, such input and output devices operate in a specific device dependent color space. Since different devices use different combinations of media, colorants and the like, with outputs being viewed under different viewing conditions, any one image will appear to differ in color from one device to another. For instance, a monitor typically utilizes red, green and blue light on a black screen to generate a color image and therefore is said to operate in RGB color space. A printer, on the other hand, typically generates color by combining inks of the colors cyan, magenta, yellow and black on a white (or other) medium and therefore is said to operate in CMYK color space. To further complicate matters, although two devices may operate in the same color space, they may not mix colors in the same fashion to achieve the same color appearance. The characteristic way in which a device reproduces color is often referred to as the device's color space. Information that describes the device's color space is referred to as a device color profile.

In addition to the different color spaces, and the different ways in which the colors of a single color space can be mixed and represented, there is also a significant variation in the gamut of colors that each device is capable of representing under given viewing conditions. For instance, a monitor may only be capable of displaying a limited range of the color red, while a printer may be capable of displaying a wide range of the color red. The measurement of this color range limitation is commonly referred to as the color gamut boundary of the device, and it describes the color gamut limitations of the device under certain viewing conditions.

Because of differences in color reproduction characteristics between devices, conventional color management systems are commonly utilized to ameliorate the detrimental effects that differing device color profiles may ultimately introduce into the appearance of a color image from its initial capture by an input device, or its creation on a monitor, to its eventual display on or printing by an output device. Conventional color management systems attempt to make the color image appear the same regardless of the input and output devices that are used by transforming the color image data contained in the image data file from the color space and color gamut boundary of the input device to the color space and color gamut boundary of the output device. Many color management systems provide a preferred reproduction of the color image instead of trying to make the color image appear the same. This color management process commonly requires the use of the device color profile for the input device and the device color profile for the output device. A color profile provides information regarding the color space that is utilized by the particular device and the manner in which it is utilized.

As a further consideration, because of the size of color image files, color image data is typically maintained in a data file which is in a standard compressed format, such as the JPEG format (Joint Photographic Experts Group). The JPEG scheme involves an end-to-end process wherein the color space of the image data at the beginning of the process is the same as the color space of the image data at the end of the process. The recovered RGB image data can then be transformed to the color space that corresponds to the destination device, such as a CMYK color space for a printer, after which the image data is sent to the destination device for output.

As mentioned above, however, the transformation of image data from the color space of a source (input) device to the color space of a destination (output) device can introduce significant variation in appearance of the image when ultimately output on the destination device. For this reason, a color management process is often introduced after retransformation of the compressed file into decompressed RGB color image data. As discussed above, conventional color management systems utilize at least two color profiles, one from the source device and one from the destination device, in order to match the appearance of the color image data from the color space and color gamut boundary of the source device into the color space and color gamut boundary of the destination device.

One line of development currently being pursued is a color management system now being worked on for the International Color Consortium (ICC) Reference Implementation, which utilizes device profiles that are based upon a standardized color model. This ICC color management system utilizes what is known as an ICC device profile for the source device and for the destination device. An ICC device profile includes a device specific color look-up table and a device specific gamut boundary description. A color management module (CMM) is implemented which, after decompression of a JPEG image file, takes the decompressed, recovered color image data in RGB color space and then transforms it to a standardized, color space that is both device and viewing condition independent, such as Jab, according to a standard such as the International Commission on Illumination's (CIE) Colour Appearance Model (CAM), CIECAM97s JCh color space. Jab color space is a rectangular coordinate system version of the JCh color space cylindrical coordinate system in which J is lightness, C is chroma, and h represents hue. This standardized color space represents the image's appearance independently of any particular device or viewing conditions.

In this example, the transformation to this standardized color space is performed by utilizing the device specific color look-up table of the ICC device profile for the source device. After the transformation to the Jab color space, the device specific gamut boundary descriptions of the source device and of the destination device are then utilized to map the color gamut of the image data to fit within the color gamut of the destination device. The device specific color look-up table from the ICC device profile of the destination device is then used to transform the image data from the Jab color space to the destination device color space, such as CMYK color space for a printer. The above-described process for gamut-mapping may also be performed with an image-specific, rather than a source device specific, gamut boundary description to achieve more efficient and tailored gamut-mapping of the color image data into the color gamut of the destination device. The color image data in destination device color space is then sent to the destination device for output.

Thus, in a computer environment, such as desktop publishing, it is quite common to have to transform a body of color image data from one color space into another, or at least from one device color space into another. The frequent use of an image for a purpose not intended when the image was first created or scanned, as well as the common re-use of an image (either in its original form or with modifications), make the understanding and use of such transformations ("color management") a matter of necessity.

In traditional graphic arts, in contrast, the handling of color images has been quite different. The graphic arts work flow includes two phases, prepress and print manufacture. The prepress phase includes design, capture (e.g., scanning), editing, assembly and proofing. The print manufacture phase includes the printing of the image onto the substrate (e.g., paper). In a typical graphic arts work flow, color image data is converted to the color space of the output device as early in the process as possible. For example, when printing to a cyan, magenta, yellow, black (CMYK) four-color press, input images that are to be included in a graphic arts design may actually be scanned into a CMYK color space. In addition, the editing and proofing of a design may be performed in the color space associated with a particular printing process and substrate.

A device profile may be used to perform these color space transformations. The device profile transforms the device-specific color space into a device-independent color space, such as CIELAB, and vice versa. For example, a device profile can be generated for a scanner by scanning a color test target. Software then can be used to generate a transformation, such as a translation table, between the scanned RGB device-specific values and the device-independent color space. Similarly, a device profile for a monitor can be generated by measuring a displayed range of RGB values with a colorimeter or spectrophotometer. However, the development of a device profile generally requires a large number of measurements. Moreover, a device profile is accurate only for the particular equipment for which it is generated.

The conversion from a device-independent color space to the color space of the printing device may occur in two stages. In the first stage, a device-independent color space, such as CIELAB, is converted into cyan, magenta, and yellow components. In a second stage, the CMY components are converted to CMYK components using a conventional black generation algorithm.

Industry standards organizations have promoted the adoption of standard color spaces for certain common printing conditions and substrates, which are referred to as reference printing conditions (e.g., newsprint, uncoated publication, coated publication, commercial). A standard CMYK color space has been adopted by the American National Standards Institute (ANSI) for conditions defined by Specifications for Web Offset Publications (SWOP), 1993, SWOP Incorporated. This standard color space is based on averaged measured data for a number of individual presses configured for SWOP printing conditions and a particular type of paper, as described in "Graphic Technology Color Characterization Data for Type 1 Printing", ANSI/CGATS TR001, 1995. This approach, which thus allows a joining of the flexible handling and re-use of image typical of desktop publishing with traditional graphic-arts, thus assumes that a press operator can adjust an individual press to match the standard color space as a matter of process control. It has been suggested that as few as five or six standard color spaces might suffice to handle the most common printing conditions and substrates.

The "reference printing conditions" approach just described, however, entail several disadvantages. For example, to create a standard color space requires an extensive data measurement and collection effort. (At present, the ANSI/CGATS TR001 referred to above is believed to be the only such color space to have been completed.) In addition, multiple standard color spaces are needed for different printing conditions and substrates, which tends to increase data storage requirements, and complicates the workflow, since the operator needs to keep track of more information and may, for example, have a greater likelihood of possibly using the wrong profile by mistake. Furthermore, the TR 001 data have been generated only for offset lithographic printing presses. This data does not represent other printing processes, such as gravure, flexography, letterpress, or any non-impact printing processes, such as electrophotography or inkjet. Finally, in many applications, print data must be transmitted between different devices together with an entire color space, which tends to increase the quantity of data transmitted.

For these reasons, it would be advantageous to have a system which makes possible the use of just a single standard color space, which can be adjusted to account for differences as needed to permit printing, display or other outputting of an image on a particular target substrate, with a particular choice of inks. In particular, it would be advantageous to have such a system which permits such adjustments to be made parametrically.

The present invention is directed to a method and system for adjusting a color space for use with a target substrate, and to a program product capable of being used to perform such method.

In one aspect, the color space has a gamut description defining colors outside a device-specific gamut. The method includes measuring tristimulus values of the target substrate and printing colorant primaries printed on the target substrate. The gamut description of the color space is transformed based on hue values of the color space, the measured tristimulus values of the printing colorant primaries, and the measured tristimulus values of the target substrate.

In another aspect, the color space has a translation table to transform colors between a device-independent coordinate system and a device-specific coordinate system. The method includes measuring tristimulus values of the target substrate and printing colorant primaries printed on the target substrate. The color table of the color space is transformed based on color values of the color space, the measured tristimulus values of the printing colorant primaries and the measured tristimulus values of the target substrate.

In another aspect, the color space has a linearization table configured to remap colors according to device-specific conditions. The method includes measuring dot gain on the target substrate. The linearization table of the color space is transformed based on a dot gain of the color space and the measured dot gain on the target substrate.

Preferably, a pre-existing device-dependent color space, such as the ANSI/CGATS TR 001 discussed above, is used. Since the printing conditions used in that color space are based on the assumption that a printing colorant complying with SWOP's standards is used, such as most available inks, this color space omits variations in conditions relating chiefly to choice of substrate. Moreover, certain important substrate-related phenomena, such as dot gain, are well understood and can be modeled mathematically. The most preferable manner of practicing the invention, accordingly, is to obtain the tristimulus values from the substrate to be used for a particular printing job, and instead of transforming the color image data from the CIELAB color space to the TR 001 device profile being used, modify the TR 001 device profile so that the color data are mapped in such manner as to take precise account of the target substrate. In addition, the invention may account for characteristics of various printing processes that lead to color differences in printed ink primaries. For example, the TR 001 color space, which is based on measured data for offset printing, may be adjusted to take account of the differences between offset printing and gravure printing (or any other printing method) by lightening or darkening color values or changing hues based on experience and knowledge of the characteristics of the printing processes.

The aspects of the invention discussed above lead to several advantages. For example, a single color space may be parametrically adjusted and used for multiple different substrates. This feature eliminates the need for multiple color spaces, thereby reducing data storage requirements. Moreover, this feature allows print data to be transmitted between different devices with a set of parameters, rather than an entire color space, thereby reducing the quantity of data transmitted.

This brief summary has been provided so that the nature of the invention may be understood quickly. A more complete understanding of the invention can be obtained by reference to the following detailed description of the preferred embodiment thereof, which is described by way of example only with reference to the attached drawings in which:

Figure 1 is a representative view of a computer system in which the present invention may be implemented.

Figure 2 is a detailed block diagram showing the internal architecture of the computer equipment shown in the computer system of Figure 1.

Figure 3 is a flowchart for providing a system level explanation of color management.

Figure 4 is a block diagram of color image processing equipment illustrating the employment of color management.

Figure 5 is a block diagram of a device-specific color space.

Figure 6 is a flowchart of a method for adjusting a standard color space based on measured colorimetric data.

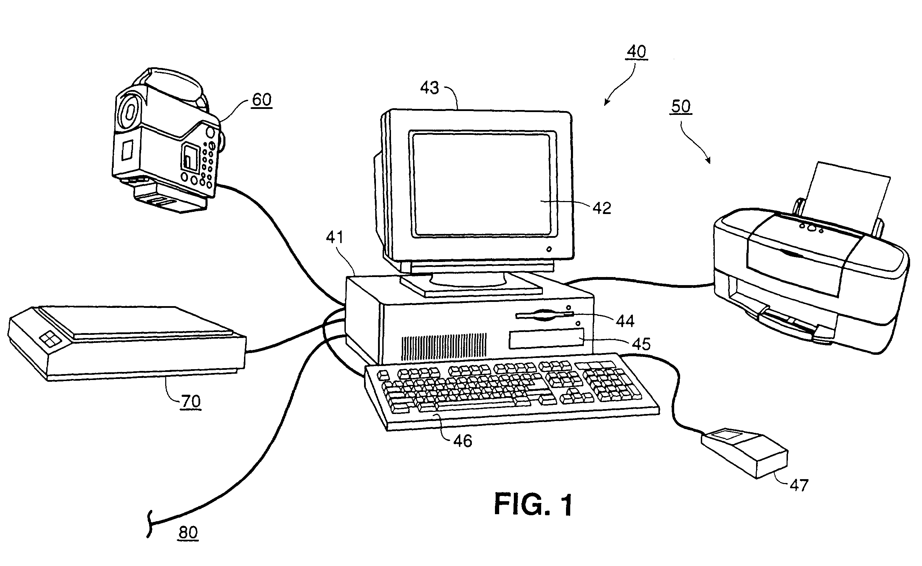

Figure 1 is a view showing the outward appearance of a representative computing system including computing equipment, peripherals and digital devices which may be used in connection with the practice of the present invention. Computing equipment 40 includes host processor 41 which comprises a personal computer (hereinafter "PC"), preferably an IBM PC-compatible computer having a windowing environment such as Microsoft Windows 95, Windows 98 or Windows NT, although it may be a Macintosh or a non-windows based computer. Provided with computing equipment 40 are color monitor 43 including display screen 42, keyboard 46 for entering text data and user commands, and pointing device 47. Pointing device 47 preferably comprises a mouse for pointing and for manipulating objects displayed on display screen 42.

Computing equipment 40 includes a computer-readable memory medium such as computer fixed disk 45 and/or floppy disk drive 44. Floppy disk drive 44 provides a means whereby computing equipment 40 can access information, such as image data, computer-executable process steps, application programs, etc. stored on removable memory media. A similar CD-ROM interface (not shown) may be provided for computing equipment 40 through which computing equipment 40 can access information stored on removable CD-ROM media.

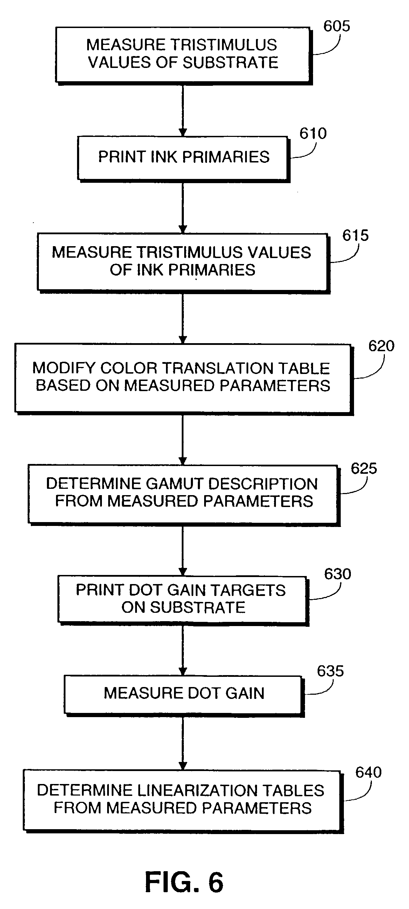

Printer 50 is a printer, such as a color laser or bubble jet printer, which forms color images on a recording medium such as paper or transparencies or the like. The invention is usable with printing press systems, and with other printers, color copiers, and other types of output devices, as described in the above introduction, however, so long as the printer or other output device is capable of being interfaced to computing equipment 40, or of receiving digital color image data from some other source. Thus, printer 50 is not limited to ink jet printers, and may include other printer types such as a laser (or electrophotographic) printer which uses toner as printing material. As discussed below with reference to Figure 6, in a case of an electrophotographic printer, toner is used as printing colorant in printing on a substrate. In addition, digital color scanner 70 is provided for scanning documents and images into computing equipment 40, and digital color camera 60 is provided for sending digital images to computing equipment 40. Of course, computing equipment 40 may acquire digital image data from other sources, such as a digital video camera or from a local area network or the Internet via network interface bus 80.

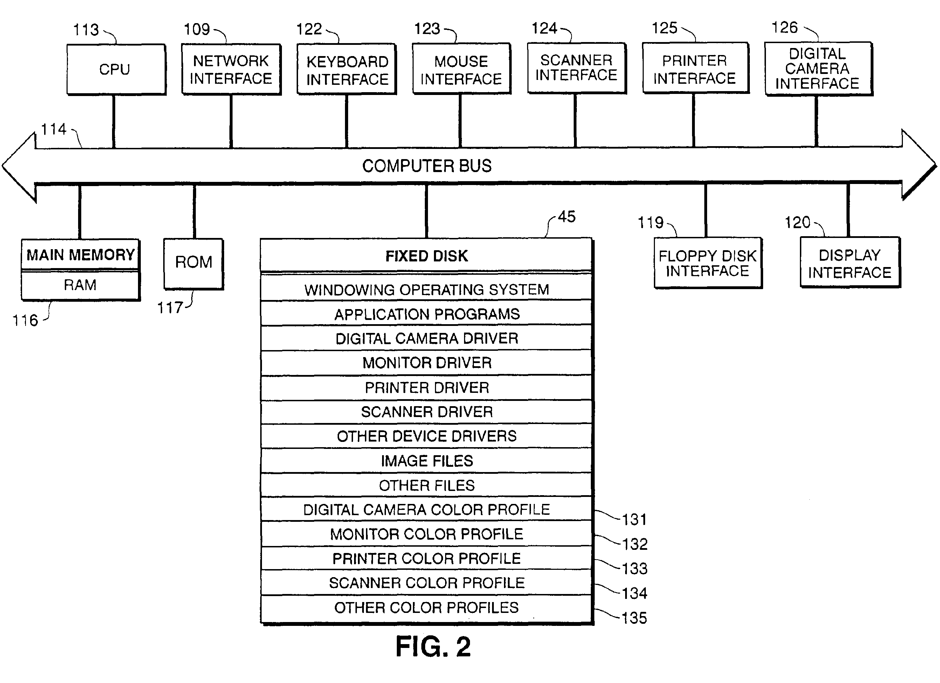

Figure 2 is a detailed block diagram showing the internal architecture of host processor 41 of computing equipment 40. As shown in Figure 2, host processor 41 includes central processing unit (CPU) 113 which interfaces with computer bus 114. Also interfacing with computer bus 114 are fixed disk 45, network interface 109, main memory (RAM) 116, read only memory (ROM) 117, floppy disk interface 119, display interface 120 to monitor 43, keyboard interface 122 to keyboard 46, mouse interface 123 to mouse 47, scanner interface 124 to scanner 70, printer interface 125 to printer 50, and digital camera interface 126 to digital camera 60.

Main memory 116 interfaces with computer bus 114 so as to provide RAM storage to CPU 113 during execution of software applications and device drivers. More specifically, CPU 113 loads process steps from fixed disk 45, another storage device, or some other source such as a network, into a region of main memory 116. CPU 113 then executes the stored process steps from main memory 116 in order to execute applications and device drivers. Data such as color images can be stored in main memory 116, where the data can be accessed by CPU 113 during execution of the process steps.

As also shown in Figure 2, fixed disk 45 typically contains an operating system, application programs such as image processing applications, including a color management module, device drivers including digital camera, monitor, printer scanner and other drivers, image files, other files, digital camera color profile 131 for digital camera 60, monitor color profile 132 for monitor 43, printer color profile 133 for printer 50, scanner color profile 134 for scanner 70, and other color profiles 135 for other devices and peripherals (not shown). The present invention may preferably be performed by computer-executable process steps which are stored on fixed disk 45 for execution by CPU 113.

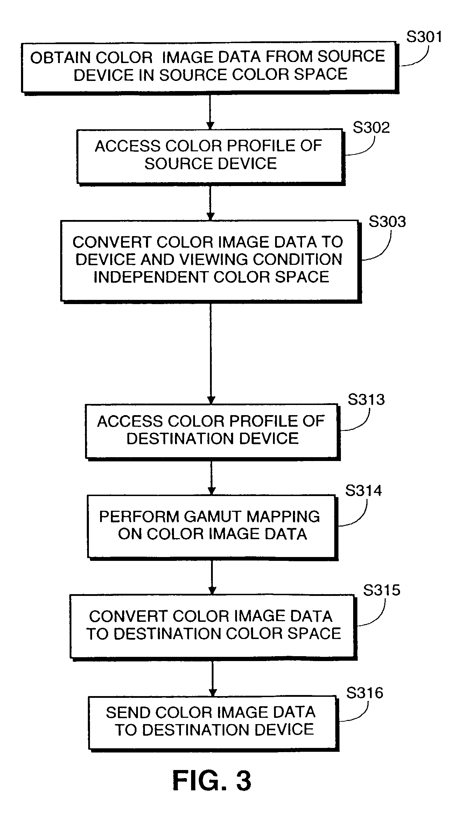

Figure 3 is a system level flowchart for explaining a color management process to which the invention can be applied. In general, the invention is directed to the creation and use of a color image file which contains color image data in a standardized color space that is device independent, most preferably CIELAB. By this means, the color image data can be accessed and used directly in a color management scheme with a standard destination device profile, such as TR 001, and to the modification of that profile in a manner suitable to the particular output device ultimately selected, and for the output conditions, including especially the target substrate. To achieve high-quality control over a hard print of the image, appropriate modifications are made to the image data (i) to put them into a form suitable for the particular output device to be used and (ii) to take account of the particular substrate to be used for the printing.

In addition, use of a color space that is device independent allows the image data to be transformed by a color management module from the color space that is device independent to the destination device color space using a standard device profile such as TR 001.

As mentioned above, the present invention is preferably performed by computer-executable program steps which are stored in fixed disk 45 of host processor 41 for access by main memory 116 and subsequent execution by CPU 113. Of course, the present invention may be carried out through other means such as an application program or a driver such as a monitor driver. The present invention may also be directly implemented in hardware, using technologies such as ASICs.

Turning to step 301 of Figure 3, the steps for performing color management begin by obtaining color image data from a source device such as scanner 70, digital camera 60, or an image retrieved from the Internet via network interface bus 80. For example, color image data corresponding to an image may be obtained from scanner 70 which scans an image and provides color image data to host processor 41 in RGB color space (red, green, blue). Next, after color image data corresponding to an image is provided from a source device, the color profile corresponding to the source device is accessed from fixed disk 45 by CPU 113 for use in the subsequent transformation of the color image data to another color space, i.e., CIELAB (step S302). (As discussed above, a color profile of a device provides information regarding the color characteristics of that device in comparison to a color standard. The color profile contains a color look-up table and a gamut boundary description each of which is specific to the particular device to which it corresponds. For example, if the color image data was obtained from scanner 70, then the scanner color profile 134 would be accessed for use in the transformation of the color image data obtained in step S301 from the source device color space in which the color image data was provided to another color space. Preferably, the color profiles 131-135 provided in fixed disk 45 may be ICC (International Color Consortium) device profiles. ICC device profiles have a standardized format for the color look-up table and gamut boundary description which correspond to a specific device.

In step S303, the color look-up table from the source device's color profile is utilized to transform the color image data to a color space that is device-independent, such as CIELAB. For example, if a color image was scanned by scanner 70 in step S301 so as to provide host processor 41 with color image data in RGB format, the color image data is transformed from RGB format in step S303 to CIELAB by using the scanner color look-up table contained in scanner color profile 134, thereby transforming the color image data to a color space that is device-independent.

At this point, the color image data is ready for color management in order to match the colors of the color image data to the gamut boundary description of the destination device to which the color image data is to be sent and to transform the color image data to the color space utilized by the destination device. For example, if the color image data was initially obtained from scanner 70, it was provided to host processor 41 in RGB color space. Steps S301-S303 would be utilized as described above to transform the color image data from RGB color space to CIELAB color space.

The color management begins in step s313, wherein the color profile of the destination device is accessed so as to obtain the color look-up table and the gamut boundary description which correspond to the destination device. Then, in step S314, gamut mapping is performed whereby the color image data, which is in CIELAB color space, is mapped from within the source device gamut boundary to within the gamut boundary of the destination device.

After completion of the gamut mapping, the color look-up table of the destination device is used to transform the color image data from the CIELAB color space to the destination device color space (step S315). For example, if printer 50 is chosen as the destination device for output of the color image data, then the color image data which is in CIELAB format is transformed in step S315 to CMYK color space for output to printer 50. Alternatively, the conversion in step S315 can occur in two steps. In the first step, the device-independent color space is converted into CMY components. In the second step, the CMY components are converted to CMYK components using a black generation algorithm that is chosen based on considerations such as the printing process, printing conditions, and substrate.

After transformation of the color image data to the destination device color space in step S315, control passes to the last step, S316, in which the color image data, which is now in the color space of the destination device, is sent to the destination device for output.

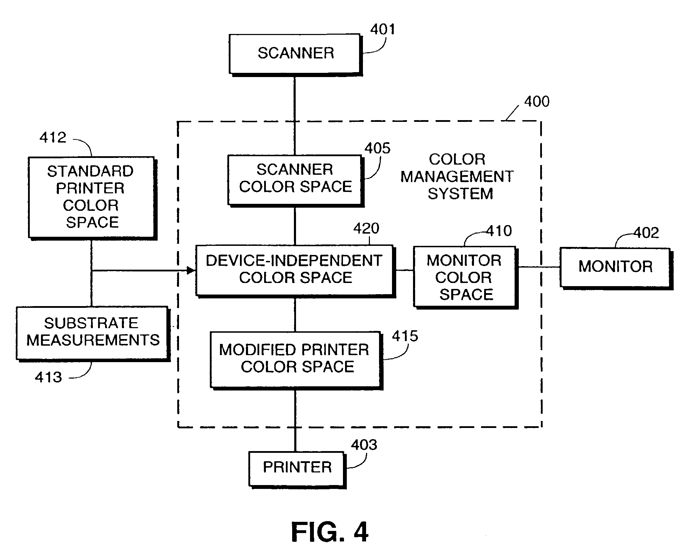

A color management system 400, as shown in Figure 4, controls the interaction of the color image data of multiple input and output devices, such as a scanner 401, monitor 402, and printer 403, to enable color images to be input, manipulated, and output with uniformity and predictability. The color management system 400 uses device-dependent color spaces 405, 410 and 415 to transform the color image data of the input and output devices into a device-independent color space 420. The standard color space 412 is modified based on the measurements 413 of the substrate and the targets printed on the substrate by the target printer. The modified printer color space is then used for color matching the image data. The color image data then may be transmitted between the multiple input and output devices.

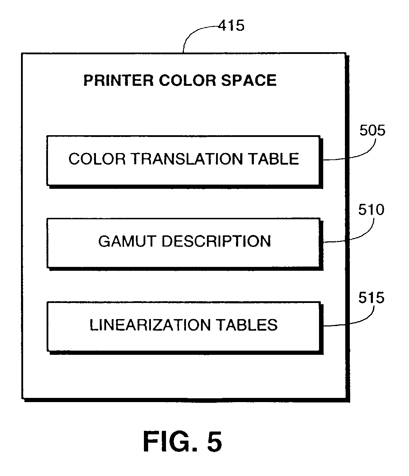

As shown in Figure 5, the device-dependent color space associated with the printer 415 may include a color translation table 505. The color translation table 505 is a look-up table that maps the ideal colors represented in the CIELAB color space 420 to colors that physically can be produced by the printer 403 for specific printing conditions and a specific substrate. Because the printer uses cyan, magenta, yellow, and black (CMYK) ink to produce colors, the printer internally represents colors using a CMYK coordinate system. The translation table 505 is configured to translate between the CMYK and CIELAB coordinate systems. In addition, the translation table 505 is modified by the invention to account for changes in color appearance due to the physical properties of the printing process and the substrate.

The printer color space 415 also may include a gamut description 510. The gamut description 510 defines the extent of the color space that physically can be produced by the printer 403 for the specified printing conditions and substrate. The gamut description 510 may be a separate data structure, such as a three-dimensional array based on the CIELAB coordinate system. Each point in the array is a single bit value that is equal to one if that particular color can be generated by the printer and equal to zero if it cannot. Alternatively, the gamut description 510 may be incorporated into the color translation table 505, for example, by filling table positions with zeros for out-of-gamut colors.

The extent of the gamut generally depends upon parameters such as the chromatic properties of the inks and the substrate. For example, the gamut description 510 for printing on a darker substrate will tend to be less extensive than for a brighter substrate. Other parameters, such as the absorbency of the substrate and the chemical properties of the inks, also will affect the extent of the gamut.

The gamut description 510 allows the color management system 400 to account for the different color handling capabilities of color image equipment. For example, colors produced by the scanner 401 that are outside the printer 403 gamut may be remapped or truncated.

The printer color space 415 also may include linearization tables 515 to adjust the tone reproduction characteristics of the individual inks. Tone levels generally are produced by printing a dot pattern having a density less than 100%, i.e., a density less than solid ink. Properties of the substrate, such as absorbency, may cause dot gain, or the expansion of the dots on the surface of the substrate, which in turn affects tone reproduction. The linearization table 515 adjusts each ink color independently to compensate for dot gain. Alternatively, this compensation may be incorporated into the color translation table 505.

The printer color space 415 may be generated from a standard CMYK color space for Specifications Web Offset Publications (SWOP) printing conditions. The standard color space, designated ANSI/CGATS TR001, is the result of averaged measured colorimetric data from a number of individual presses for a specific set of printing conditions and for a specific type of paper. As discussed below, the standard CMYK color space is parametrically adjusted to handle different printing conditions and substrates.

As shown in Figure 6, colorimetric measurements, such as the measurement of tristimulus values, are performed on the substrate to determine the brightness of the substrate (step 605). The printing colorant (e.g., ink or, in a case of a laser printer, toner) primaries and their overprints are printed on the substrate at a density of 100% (step 610). For the four-color printer 403 this would result in the following combinations of inks: C, M, Y, K, CM, CY, MY, and CMY. Colorimetric measurements are performed on the ink primaries (step 615).

The measurement of the substrate and the ink primaries results in parameters that provide information on the differences between the primary hues of the standard color space and the actual printed primary hues. The color translation table of the standard color space is modified using these parameters to compensate for the hue differences (step 620). For example, if the printed cyan ink is darker than the primary cyan specified in the standard color space, the printer color space can be lightened along the cyan coordinate axis. As a further example, if the substrate is darker than the standard color space white, the printer color space can be adjusted along the lightness axis accordingly.

The measured hue parameters also may be used to determine the gamut of the printer for the specific printing conditions and substrate. The colorimetric values of the printed ink primaries form points on the gamut boundary, since the ink primaries have the highest chromatic content possible under the specified conditions. Connecting these outermost points results in the gamut description (step 625).

Dot gain targets are then printed on the substrate (step 630), and dot gain measurements are performed using conventional techniques (step 635). From the dot gain measurements, linearization tables can be computed for each color channel (ink color) of the printer (step 640).

In many applications, such as open network desktop publishing, it may be necessary to transmit color image data to multiple output locations. For example, color images that are designed and edited in one location may be printed on a number of different printers connected to the network. Conventional color management systems transmit or store in memory an entire printer color space for each network printer. However, if the network printers are configured to adjust a standard color space, as described above, the measured hue and dot gain parameters can be transmitted or stored, rather than the entire printer color space, thereby reducing data storage and transmission requirements.

Measurement of the substrate tristimulus values may be performed in advance, and an operator may input the resulting information in preparation for printing. Alternatively, the tristimulus measurements may be made immediately before printing.

Suitable means for measuring the tristimulus values are a spectrophotometer, although it is within the scope of the invention to use a colorimeter or calibrated scanner, provided that the scanner is calibrated to represent colorimetric values.

The invention is preferably performed by computer-executable program steps which are stored on a computer-readable storage medium for access and execution by a microprocessor. The invention also may be carried out through other means such as an application program or a driver program. In addition, the invention may be directly implemented in hardware using technologies such as application-specific integrated circuits (ASIC).

The invention has been described with respect to particular illustrative embodiments. It is to be understood that the invention is not limited to the above-described embodiments and that various changes and modifications may be made by those of ordinary skill in the art without departing from the spirit and scope of the invention.

## Claims

1. A method for adjusting a color space for use with a target substrate, the color space being defined by a color space definition that has a translation table for use in transforming colors between a device-independent coordinate system and a device-specific coordinate system, the method comprising:
measuring tristimulus values of printing colorant primaries printed on the target substrate, and
transforming the translation table of the color space based on color values in the translation table and the measured tristimulus values of the printing colorant primaries.

2. The method of claim 1, further comprising measuring tristimulus values of the target substrate,
wherein transforming the translation table of the color space is based on the measured tristimulus values of the target substrate.

3. The method of claim 1, wherein transforming the translation table of the color space comprises modifying hue values of the translation table in accordance with the measured tristimulus values of the printing colorant primaries.

4. The method of claim 1, wherein transforming the translation table of the color space comprises lightening color values of the translation table if the measured tristimulus values of the printing colorant primaries are darker than corresponding color values in the translation table.

5. The method of claim 1, wherein transforming the translation table of the color space comprises darkening color values of the translation table if the measured tristimulus values of the printing colorant primaries are lighter than corresponding color values in the translation table.

6. The method of claim 2, wherein the color space definition includes a gamut description, the method further comprising transforming the gamut description of the color space based on hue values of the color space, the measured tristimulus values of the printing colorant primaries, and the measured tristimulus values of the target substrate.

7. The method of claim 2, further comprising deriving a gamut description from the color space based on hue values of the color space, the measured tristimulus values of the printing colorant primaries, and the measured tristimulus values of the target substrate.

8. The method of claim 1, wherein the color space definition has a linearization table, the method further comprising:
measuring dot gain on the target substrate, and
transforming the linearization table of the color space based on a dot gain of the color space and the measured dot gain on the target substrate.

9. The method of claim 1, wherein said transforming step comprises creating a second table, from the translation table, such that application of the original transformation table to a body of color image data followed by application of the second table, achieves the desired transformation.

10. The method of claim 1, wherein transforming the translation table of the color space comprises adjusting color values of the translation table to account for different printing processes associated with the target substrate and the color space definition.

11. The method of claim 1, wherein the device-specific coordinate system comprises axes corresponding to cyan, magenta, yellow, and black printing colorants, and the method further comprises generating color values associated with the black axis based on the measured tristimulus values of the target substrate.

12. A method for adjusting a color space for use with a target substrate, the color space being defined by a color space definition that has a gamut description, the method comprising:
measuring tristimulus values of printing colorant primaries printed on the target substrate, and
transforming the gamut description of the color space based on hue values of the color space and the measured tristimulus values of the printing colorant primaries.

13. The method of claim 12, further comprising measuring tristimulus values of the target substrate,
wherein transforming the gamut description of the color space is based on the measured tristimulus values of the target substrate.

14. A method for adjusting a color space for use with a target substrate, the color space being defined by a color space definition that has a linearization table, the method comprising:
measuring dot gain on the target substrate, and
transforming the linearization table of the color space based on a dot gain of the color space and the measured dot gain on the target substrate.

15. A color management system, for adjusting a color space for use with a target substrate, the color space being defined by a color space definition that has a translation table for use in transforming colors between a device-independent coordinate system and a device-specific coordinate system, said system comprising:
means for measuring tristimulus values of printing colorant primaries printed on the target substrate, and
means for transforming the translation table of the color space based on color values in the translation table and the measured tristimulus values of the printing colorant primaries.

16. The color management system of claim 15, further comprising means for measuring tristimulus values of the target substrate,
wherein the means for transforming the translation table of the color space operates based on the measured tristimulus values of the target substrate.

17. The system of claim 15, wherein transformation of the translation table of the color space comprises modifying hue values of the translation table in accordance with the measured tristimulus values of the printing colorant primaries.

18. The system of claim 15, wherein transformation of the translation table of the color space comprises lightening color values of the translation table if the measured tristimulus values of the printing colorant primaries are darker than corresponding color values in the translation table.

19. The system of claim 15, wherein transformation of the translation table of the color space comprises darkening color values of the translation table if the measured tristimulus values of the printing colorant primaries are lighter than corresponding color values in the translation table.

20. The system of claim 16, wherein the color space definition includes a gamut description, and said system further comprising means for transforming the gamut description of the color space based on hue values of the color space, the measured tristimulus values of the printing colorant primaries, and the measured tristimulus values of the target substrate.

21. The system of claim 16, further comprising means for deriving a gamut description from the color space based on hue values of the color space, the measured tristimulus values of the printing colorant primaries, and the measured tristimulus values of the target substrate.

22. The system of claim 15, wherein the means for transforming the translation table of the color space adjusts color values of the translation table to account for different printing processes associated with the target substrate and the color space definition.

23. The system of claim 15, wherein the device-specific coordinate system comprises axes corresponding to cyan, magenta, yellow, and black printing colorants, and the system further comprises means for generating color values associated with the black axis based on the measured tristimulus values of the target substrate.

24. The system of claim 15, wherein the color space definition has a linearization table, and said system further comprising:
means for measuring dot gain on the target substrate, and
means for transforming the linearization table of the color space based on a dot gain of the color space and the measured dot gain on the target substrate.

25. The system of claim 15, wherein said transforming means is for creating a second table, from the translation table, such that application of the original transformation table to a body of color image data followed by application of the second table, achieves the desired transformation.

26. A system for adjusting a color space for use with a target substrate, the color space being defined by a color space definition that has a gamut description, said system comprising:
means for measuring tristimulus values of printing colorant primaries printed on the target substrate, and
means for transforming the gamut description of the color space based on hue values of the color space and the measured tristimulus values of the printing colorant primaries.

27. The system of claim 26, further comprising means for measuring tristimulus values of the target substrate,
wherein the means for transforming the gamut description of the color space operates based on the measured tristimulus values of the target substrate.

28. A system for adjusting a color space for use with a target substrate, the color space being defined by a color space definition that has a linearization table, said system comprising:
means for measuring dot gain on the target substrate, and
means for transforming the linearization table of the color space based on a dot gain of the color space and the measured dot gain on the target substrate.

29. A memory medium storing executable program code which causes to be executed a method for adjusting a color space for use with a target substrate, the color space being defined by a color space definition that has a translation table for use in transforming colors between a device-independent coordinate system and a device-specific coordinate system, the method comprising:
measuring tristimulus values of printing colorant primaries printed on the target substrate, and
transforming the translation table of the color space based on color values in the translation table, the measured tristimulus values of the printing colorant primaries.

30. The memory medium of claim 29, further comprising measuring tristimulus values of the target substrate,
wherein transforming the translation table of the color space is based on measured tristimulus values of the target substrate.

31. The memory medium of claim 29, wherein transforming the translation table of the color space comprises modifying hue values of the translation table in accordance with the measured tristimulus values of the printing colorant primaries.

32. The memory medium of claim 29, wherein transforming the translation table of the color space comprises lightening color values of the translation table if the measured tristimulus values of the printing colorant primaries are darker than corresponding color values in the translation table.

33. The memory medium of claim 29, wherein transforming the translation table of the color space comprises darkening color values of the translation table if the measured tristimulus values of the printing colorant primaries are lighter than corresponding color values in the translation table.

34. The memory medium of claim 30, wherein the color space definition includes a gamut description, the method further comprising transforming the gamut description of the color space based on hue values of the color space, the measured tristimulus values of the printing colorant primaries, and the measured tristimulus values of the target substrate.

35. The memory medium of claim 30, further comprising deriving a gamut description from the color space based on hue values of the color space, the measured tristimulus values of the printing colorant primaries, and the measured tristimulus values of the target substrate.

36. The memory medium of claim 29, wherein the color space definition has a linearization table, the method further comprising:
measuring dot gain on the target substrate, and
transforming the linearization table of the color space based on a dot gain of the color space and the measured dot gain on the target substrate.

37. The memory medium of claim 29, wherein said transforming step comprises creating a second table, from the translation table, such that application of the original transformation table to a body of color image data followed by application of the second table, achieves the desired transformation.

38. The memory medium of claim 29, wherein transforming the translation table of the color space comprises adjusting color values of the translation table to account for different printing processes associated with the target substrate and the color space definition.

39. The memory medium of claim 29, wherein the device-specific coordinate system comprises axes corresponding to cyan, magenta, yellow, and black printing colorants, and the medium further comprises generating color values associated with the black axis based on the measured tristimulus values of the target substrate.

40. A memory medium storing executable program code which causes to be executed a method for adjusting a color space for use with a target substrate, the color space being defined by a color space definition that has a gamut description, the method comprising:
measuring tristimulus values of printing colorant primaries printed on the target substrate, and
transforming the gamut description of the color space based on hue values of the color space and the measured tristimulus values of the printing colorant primaries.

41. The memory medium of claim 40, further comprising measuring tristimulus values of the target substrate,
wherein transforming the gamut description of the color space is based on the measured tristimulus values of the target substrate.

42. A memory medium storing executable program code which causes to be executed a method for adjusting a color space for use with a target substrate, the color space being defined by a color space definition that has a linearization table, the method comprising:
measuring dot gain on the target substrate, and
transforming the linearization table of the color space based on a dot gain of the color space and the measured dot gain on the target substrate.
